# EUROPÄISCHE PATENTSCHRIFT

(11) **EP 0 314 036 B1**
(45) Veröffentlichungstag und Bekanntmachung des Hinweises auf die Patenterteilung: **03.02.1993**
(21) Anmeldenummer: 88117654.9
(22) Anmeldetag: 24.10.1988
(51) Int. Cl.: B32B 31/18, B29C 67/18, B29C 63/02

(54) **Vorrichtung zum Laminieren und Schneiden von Fotoresistbahnen**
Apparatus for laminating and cutting photoresist webs
Appareil pour laminer et couper des bandes photorésists

(30) Priorität: 28.10.1987 DE 3736509
(43) Veröffentlichungstag der Anmeldung: 03.05.1989
(73) Patentinhaber: HOECHST AKTIENGESELLSCHAFT, 65926 Frankfurt am Main (DE)
(72) Erfinder: Stork, Martin, D-6052 Mühlheim am Main (DE)

(56) Entgegenhaltungen:
- EP-A- 0 125 584
- EP-A- 0 213 555
- EP-A- 0 220 646
- EP-A- 0 222 446
- EP-A- 0 229 842
- DE-A- 3 334 009
- DE-A- 3 400 085

## Beschreibung

Die Erfindung betrifft eine Vorrichtung zum Laminieren und Schneiden von Fotoresistbahnen, die Transportrollen den beiden Seiten eines Trägers zuführen, der durch den Spalt zweier Laminierwalzen hindurchläuft, mit beweglichen Vakuumleisten zum Ansaugen und Festhalten der Fotoresistbahnen und mit Schneideinrichtungen für einen Parallelschnitt der Fotoresistbahnen während des Laminiervorgangs.

Eine derartige Vorrichtung ist aus der EP-A2-0 213 555 bekannt und ermöglicht das Schneiden von Fotoresistbahnen in Fotoresistbogen definierter Größe sowie das faltenfreie Laminieren der Fotoresistbogen auf flexiblen und starren Trägermaterialien, beispielsweise Leiterrohplatten. Diese bekannte Vorrichtung zum Schneiden und Laminieren ist in eine bewegliche Baugruppe eines Laminators integriert, so daß Schneiden und Laminieren ohne Unterbrechung des Laminiervorgangs erfolgen können. Bei dieser Vorrichtung werden die Fotoresistbahnen in ihrer gesamten Breite an die Vorderkante von Vakuumleisten mittels Unterdruck angesaugt, wobei diese Vakuumleisten schräg zur Laufrichtung des Trägermaterials hin- und herverfahrbar sind. Die Vakuumleisten werden mit den an der Vorderkante derselben anhaftenden Fotoresistbahnen in Richtung auf Laminierwalzen so weit zubewegt, bis die Fotoresistbahnen gemeinsam mit dem Trägermaterial durch die angetriebenen Laminierwalzen unter gleichzeitigem Vorschub der Fotoresistbahnen durch die Transportwalzen erfaßt werden und das Laminieren beginnt. Mit dem Erfassen der Fotoresistbahnen durch die Laminierwalzen werden die Vakuumleisten in ihre Ausgangsstellung zurückgefahren. Gleichzeitig führen zwei Schneidemesser einen Parallelschnitt an beiden Fotoresistbahnen durch, ohne daß während des Schneidevorgangs ein Anhalten des Laminiervorgangs notwendig wird.

Aus den EP-A1-0 040 842, 0 040 843 und 0 041 642 sind Laminierverfahren bekannt, bei denen ein Substrat- bzw. ein Schichtträger beidseitig unter Druckanwendung mit einem Trockenresist laminiert wird. Der Trockenresist wird für die jeweilige zu laminierende Seite dieses Schichtträgers, beispielsweise eine Leiterplatte, von einer Vorratsrolle abgezogen und einem Paar von Laminierwalzen zugeführt, durch deren Spalt die beiden Trockenresistfilme und der dazwischen befindliche Schichtträger hindurchlaufen. Anschließend werden die beschichteten Schichtträger mittels einer Schneidvorrichtung vereinzelt, d. h. die beidseitigen auf den Schichtträgern aufgebrachten Fotoresistbahnen werden durchschnitten.

Die US-PS 4 214 936 betrifft eine Laminiervorrichtung, bei der kontinuierlich vorwärtsbewegte Platten kontaktbeheizt sind und beidseitig laminiert werden. Sobald ein Sensor die Hinterkante der vorgeheizten Platte vor ihrem Eintritt in den Laminierwalzenspalt feststellt, werden die Laminierwalzen nach einer gewissen Verzögerungszeit gestoppt, wodurch es ermöglicht wird, daß die Hinterkante der Platte den Laminierspalt passiert. Wird die Vorderkante der nachfolgenden Platte erfaßt, beginnen die Laminierwalzen von neuem zu laufen, und die in den Spalt eintretenden Platte wird laminiert. Die auf beiden Seiten der Platte aufgebrachten Fotoresistbahnen werden als Endlosbahn dem Laminator zugeführt, und durch das Laminieren entsteht ein zusammenhängendes Band aus zwei Fotoresistschichten, zwischen denen jeweils im gleichen Abstand die Platten eingeschlossen sind. Die Verbindungslänge der Resistschichten zwischen zwei Platten kann beispielsweise bis zu 18 mm betragen. Das Trennen der Platten voneinander erfolgt in zwei Schneidvorgängen entlang der Hinterkante der vorderen Platte und entlang der Vorderkante der nachfolgenden Platte. Häufig sind sogar drei Schneidvorgänge erforderlich, da beim ersten Schnitt zunächst nur das Verbindungsstück der Fotoresistbahnen zwischen zwei Platten durchschnitten wird und anschließend die über die Vorder- und Hinterkante überstehenden Trockenresistschichten erst beim Konfektionieren kantengleich abgeschnitten werden.

Aus der DE-OS 35 38 117 ist eine Trennvorrichtung für Platten bekannt, mit der das zusammenhängende Fotoresistband, das auf voneinander beabstandete Platten auflaminiert ist, über die Breite geschnitten wird. In einer Halterung der Trennvorrichtung ist eine Querschneideinrichtung befestigt, die zwei Messerhalter mit zueinander parallelen Messern umfaßt, die auseinander-und zusammenfahrbar sind und die während der Querbewegung das Fotoresistband entlang der Hinterkante und der Vorderkante zweier aufeinanderfolgender Platten in einem parallelen Doppelschnitt durchschneiden. Diese Trenneinrichtung ist eine eigenständige Baueinheit, die nach der Laminiervorrichtung angeordnet ist.

Aufgabe der Erfindung ist es, eine Vorrichtung zum Formatschneiden von auf einem Träger ein- oder beidseitig aufzulaminierenden Fotoresistbahnen zu schaffen, die einen exakten, senkrecht zu den Fotoresistbahnen ausgeführten Schnitt ohne Unterbrechung des Laminiervorgangs ermöglicht.

Diese Aufgabe wird erfindungsgemäß dadurch gelöst, daß auf einem Vorschubschlitten, der in Laufrichtung des Trägers hin- und herverfahrbar ist, zwei Schneideinheiten, ausgerüstet mit Vakuumleisten und Schneidbändern, angeordnet sind, daß ein Sensor die Vorder- und Hinterkante des Trägers erfaßt, mit einem Impulsgeber verbunden ist und über diesen die Hubzylinder zum Auseinander- und Zusammenfahren der Schneideinheiten senkrecht zur Laufrichtung des Trägers steuert.

In Weiterbildung der Erfindung sind die Vakuumleisten an Kolbenstangen der Hubzylinder befestigt, werden Näherungsschalter, die in geringem Abstand parallel zu den Kolbenstangen angeordnet sind, durch die Bewegungen der Kolbenstangen geschaltet und beenden die Schaltimpulse der Näherungsschalter an den Umkehr- und/oder Haltepunkten des Zusammen- bzw. des Auseinanderfahrens der Vakuumleisten den Unterdruck in den Vakuumleisten und schalten auf das Auseinanderfahren der Vakuumleisten um bzw. halten die Auseinanderbewegung der Vakuumleisten an.

In Ausgestaltung der Erfindung ist das obere und das untere Schneidband jeweils an einem Haltebalken befestigt, sind die Haltebalken mit Kolbenstangen von Hubzylindern verbunden, nehmen die Schneidbänder auf der Höhe der auseinandergefahrenen oberen und unteren Vakuumleiste ihre Ausgangsposition quer zur Laufrichtung des Trägers ein und beträgt die Schneidbewegung der Schneidbänder senkrecht zur Laufrichtung des Trägers bis zu 10 mm und ist kürzer als der Abstand von der Ausgangsposition zu der Bahn des Trägers.

Die weitere Ausgestaltung der Erfindung ergibt sich aus den Merkmalen der Patentansprüche 4 bis 12.

Mit der Erfindung wird der Vorteil erzielt, daß sowohl einseitiges als auch zweiseitiges Laminieren des Trägers und ein einwandfreies Schneiden der Fotoresistbahnen sichergestellt ist, ohne daß es zu einem Abplatzen bzw. Splittern der Fotoresistschichten an den Schnittkanten kommt, wie dies im allgemeinen bei einer schrägen Schnittführung der Fall ist.

Die Erfindung wird im folgenden anhand eines zeichnerisch dargestellten Ausführungsbeispiels näher erläutert. Es zeigen:
- Fig. 1: eine schematische Seitenansicht der Vorrichtung nach der Erfindung,
- Fig. 2: eine Vorderansicht der Vorrichtung nach Fig. 1,
- Fig. 3: eine Draufsicht auf ein Schneidband mit dem zugehörigen Haltebalken und
- Fig. 4: eine Vorderansicht des Schneidbandes und des Haltebalkens nach Fig. 3.

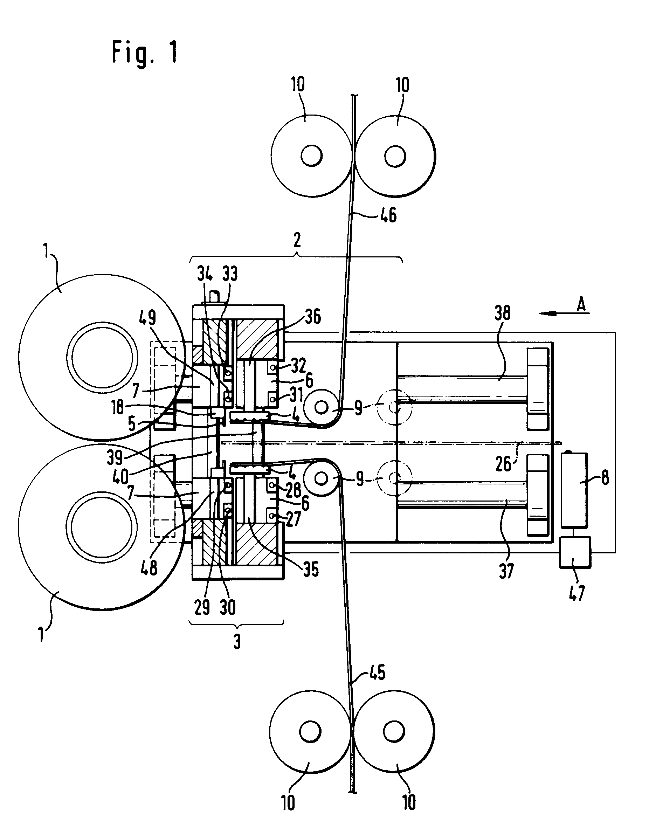

Wesentlicher Bestandteil der Vorrichtung zum Laminieren und Schneiden von Fotoresistbahnen in Form von Fotoresistbändern 45,46 ist ein Vorschubschlitten 2, der in Laufrichtung A eines horizontal geführten Trägers 26 hin- und herverfahrbar ist. Die Fotoresistbänder 45,46 werden von nicht gezeigten Vorratsrollen abgezogen und zwischen je einem Paar von Transportrollen 10,10 hindurch vorgeschoben und über Umlenkrollen 9,9 aus ihrer senkrechten Richtung in eine horizontale Richtung umgelenkt. Die Transportrollen 10 führen die Fotoresistbänder 45,46 über die Umlenkrollen 9 den Vakuumleisten 4,4 zu, die parallel zu der Bahn des Trägers 26 oberhalb und unterhalb dieser Bahn angeordnet sind. Auf dem Vorschubschlitten 2 befinden sich zwei Schneideinheiten 3,3, welche die Vakuumleisten 4,4 und Schneidbänder 5,5 umfassen. In Fig. 1 sind die Umlenkrollen 9,9 in der vorgeschobenen Stellung des Vorschubschlittens 2 mit festen Linien eingezeichnet, während diese Umlenkrollen 9,9 in der zurückgefahrenen Stellung des Vorschubschlittens 2 gestrichelt dargestellt sind.

Die Vakuumleisten 4,4 sind an Kolbenstangen 35,36 von Hubzylindern 6,6 befestigt, von denen einer oberhalb und einer unterhalb der Bahn des Trägers 26 auf dem Vorschubschlitten 2 angeordnet ist. In geringem Abstand sind parallel zu den Kolbenstangen 35 bzw. 36 Näherungsschalter 27,28 bzw. 31,32 angeordnet, die durch die Bewegungen der Kolbenstangen 35 oder 36 geschaltet werden. Wie nachstehend noch näher beschrieben werden wird, wird durch die Schaltimpulse der Näherungsschalter 28,31 bzw. 27,32 der Unterdruck in den Vakuumleisten an den Umkehr- und/oder Haltepunkten des Zusammen- bzw. des Auseinanderfahrens der Vakuumleisten auf normalen Druck umgeschaltet, und des weiteren wird auf das Auseinanderfahren der Vakuumleisten umgeschaltet bzw. die Auseinanderbewegung der Vakuumleisten angehalten.

Der Vorschubschlitten 2 bewegt sich längs zweier Schlittenführungen 37,38 und wird durch einen nicht gezeigten Antriebsmotor hin- und herverfahren. In Laufrichtung A befindet sich vor dem Vorschubschlitten 2 ein optischer Sensor 8, der die Vorder- und Hinterkante eines jeden Trägers 26 erfaßt. Dieser optische Sensor 8 ist mit einem Impulsgeber 47 verbunden, durch dessen Impulse die Hubzylinder 6,6 zum Auseinander- und Zusammenfahren der Schneideinheiten 3,3 bzw. der Vakuumleisten 4,4 senkrecht zur Laufrichtung A des Trägers 26 gesteuert werden.

In unmittelbarer Nachbarschaft der Vakuumleisten 4,4 befinden sich ein oberes und ein unteres Schneidband 5, die jeweils elektrisch beheizt sind. Jedes der beiden Schneidbänder 5,5 ist an einem zugehörigen Haltebalken 14,14 befestigt, die mit Kolbenstangen 48,49 von weiteren Hubzylindern 7,7 verbunden sind. Diese Hubzylinder 7,7 sind parallel zu den Hubzylinder 6,6, an denen die Vakuumleisten 4,4 angebracht sind, angeordnet. In ihren Ausgangspositionen befinden sich die Schneidbänder 5,5 auf der Höhe der auseinandergefahrenen oberen und unteren Vakuumleiste 4. Die Schneidbänder 5,5 erstrecken sich quer zur Laufrichtung A des Trägers 26 über dessen Breite und ihre Schneidbewegung erfolgt senkrecht zur Laufrichtung A des Trägers 26. Die Größe der Schneidbewegung beträgt bis zu 10 mm, wobei diese Größe kürzer als der Abstand der Ausgangsposition des einzelnen Schneidbandes zu der Bahn des Trägers 26 ist. Mit anderen Worten bedeutet dies, daß die Schneidbänder nicht bis zu dem Träger während des Schnittes abgesenkt bzw. angehoben werden.

Parallel zu den Kolbenstangen 48,49 der Hubzylinder 7,7 sind weitere Näherungsschalter 29,30 bzw. 33,34 angeordnet, die durch die Bewegungen der Kolbenstangen geschaltet werden. Die Schaltimpulse dieser Näherungsschalter steuern das Anheben bzw. das Absenken der Schneidbänder 5,5 nach vollbrachtem Parallelschnitt der Fotoresistbänder 45,46 und halten die Schneidbänder 5,5 in ihren Ausgangspositionen nach der Rückkehr aus den Schnittpositionen an. Die Näherungsschalter 27 bis 34 können beispielsweise kleine Reedschalter sein.

Um ein Verkanten der Vakuumleisten 4,4 während ihrer Bewegung zu verhindern, ist parallel zu beiden Seiten der Kolbenstangen 35,36 der Hubzylinder 6,6 je eine Linearführung mit einer Führungswelle 39 für die Vakuumleisten 4,4 angeordnet. Aus dem gleichen Grund befinden sich parallel zu beiden Seiten der Kolbenstangen 48,49 der Hubzylinder 7,7 Linearführungen mit Führungswellen 40 für die Schneidbänder 5,5, so daß diese während des Schneidvorgangs gradlinig geführt werden.

In Laufrichtung A des Trägers 26 sind hinter dem Vorschubschlitten 2 eine obere und untere Laminierwalze 1 angeordnet, durch deren Spalt der Träger 26 zusammen mit den auflaminierten Fotoresistbändern 45,46 hindurchgeführt wird.

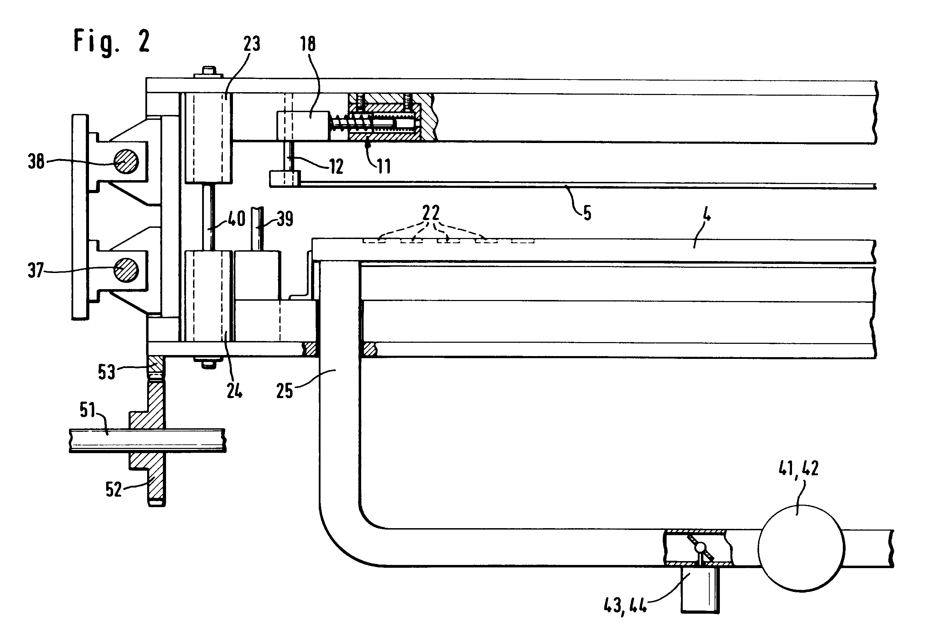

Wie aus Fig. 2 ersichtlich ist, ist die einzelne Vakuumleiste 4 mit Sauglöchern 22 versehen, die beispielsweise mit Unterdruck beaufschlagt werden, um das Fotoresistband anzusaugen und zu halten. Jede der beiden Vakuumleisten 4 ist über eine Vakuumleitung 25 mit einem Vakuumgebläse 41 bzw. 42 verbunden. In jeder Vakuumleitung 25 befindet sich ein Vakuumventil 43 bzw. 44. Die Gebläse 41,42 sind im eingeschalteten Zustand ständig in Betrieb. Durch Öffnen der pneumatisch betätigten Ventile 43,44 wird sofort ein ausreichender Unterdruck erzeugt, so daß die Vakuumleiste 4 das Fotoresistband ansaugt und festhält.

Unterhalb des Vorschubschlittens 2 befindet sich eine Antriebswelle 51, auf der ein Zahnrad 52 aufsitzt, das mit einer Zahnstange 53 an der Unterseite des Vorschubschlittens 2 kämmt und diesen entsprechend der Drehrichtung der Antriebswelle 51 hin- und herverfährt. In Fig. 2 sind die Führungswellen 39 und 40 dargestellt, wobei die Führungswelle 40 in Linearkugelführungen 23,24 geführt ist. Das eine Ende des Schneidbandes 5 ist über einen Isolator 12 an einem Spannklotz 18 befestigt, der mit einer Schneidband-Spanneinheit 11 in Verbindung steht.

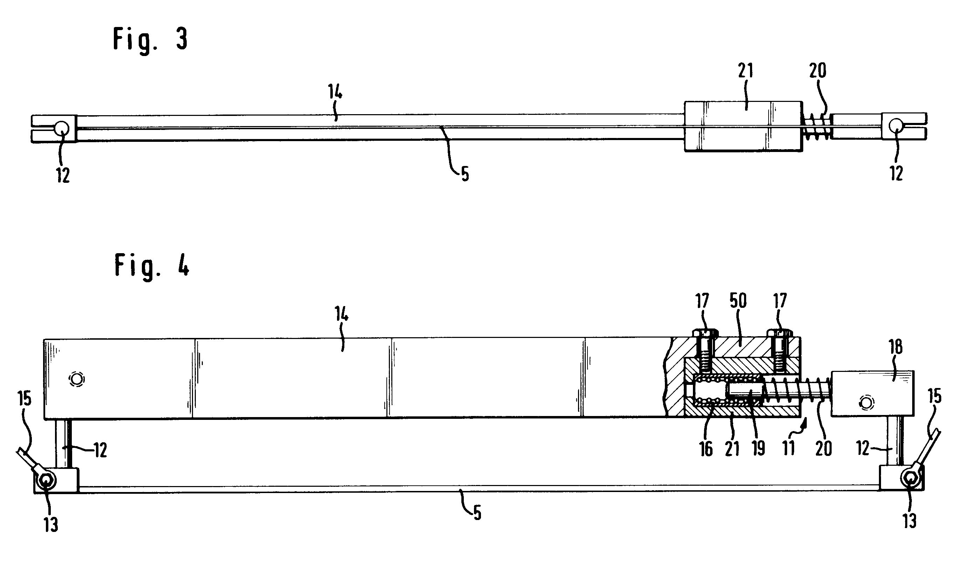

Fig. 3 zeigt eine Draufsicht auf ein Schneidband 5, das an einem Haltebalken 14 befestigt ist, der an dem einen Ende eine Halterung 21 für eine Linearkugelführung 16 aufweist. Wie aus der Fig. 4 ersichtlich ist, ist jedes der beiden Schneidbänder 5,5 über Isolatoren 12,12 mit dem dazugehörigen Haltebalken 14 verbunden. An den Endstücken der Isolatoren 12,12 befinden sich elektrische Anschlüsse 13 für die Stromzuführung 15 zum Beheizen der Schneidbänder 5,5. Der eine Isolator 12 ist direkt an dem Haltebalken befestigt, während der andere Isolator über die Schneidband-Spanneinheit 11 mit dem Haltebalken 14 in Verbindung steht. Die Schneidband-Spanneinheit 11 besteht aus dem Spannklotz 18 und einer gehärteten Welle 19, auf der eine Druckfeder 20 aufgeschoben ist. An dem Spannklotz 18 ist der eine Isolator 12 angebracht. Die Isolatoren 12,12 verhindern einen Spannungsüberschlag zwischen dem Schneidband 5 und dem Haltebalken 14.

Für die Aufnahme der Halterung 21 in dem Haltebalken 14 weist dieser an einem Stirnende einen Ausschnitt auf, der durch einen Steg 50 des Haltebalkens 14 begrenzt ist. Die Halterung 21 ist in diesen Ausschnitt eingepaßt und mit dem Steg 50 durch Schrauben 17,17 verbunden. In Längsrichtung des Haltebalkens 14 befindet sich in der Halterung 21 eine Linearkugelführung 16, in welche die Welle 19 teilweise eingeschoben ist. Bei dieser Linearkugelführung 16, ebenso wie bei den übrigen Linearkugelführungen, handelt es sich um sogenannte Linearkugelbüchsen, in deren Umfang in Längsrichtung Kugeln eingelassen sind, die eine eingeschobene Welle exakt gradlinig mit sehr geringer Reibung führen. Die Druckfeder 20 ist mit einem Ende gegen die Stirnfläche der Linearkugelführung 16 und mit dem anderen Ende gegen den Spannklotz 18 abgestützt. Dehnt sich beispielsweise das Schneidband 5 durch das Beheizen mit elektrischem Strom aus, so wird die Längsdehnung des Schneidbandes 5 durch die Druckfeder 20 kompensiert, die dann den Spannklotz 18 mit dem Isolator 12 in Fig. 4 nach rechts verschiebt, so lange bis das Schneidband 5 gespannt ist. Zieht sich andererseits beim Abschalten der elektrischen Stromzufuhr das Schneidband 5 zusammen, so drückt der Spannklotz 18 gegen die Federkraft der Druckfeder 20 die Welle 19 tiefer in die Linearkugelführung 16 hinein, da die Endstirnfläche der Welle 19 genügend Spiel innerhalb der Linearkugelführung 16 besitzt. Durch die Schneidband-Spanneinheit 11 ist sichergestellt, daß das Schneidband 5 jederzeit straff gespannt ist.

Im folgenden wird die Betriebsweise der Vorrichtung näher beschrieben:

In der Ausgangsstellung befindet sich der Vorschubschlitten 2 in seiner hinteren Stellung, in der die Lage der Umlenkrollen 9,9 gestrichelt in Fig. 1 eingezeichnet ist. Die Vakuumleisten 4,4 sind auseinandergefahren, mit Unterdruck beaufschlagt und halten die Fotoresistbänder 45,46 fest. Die Gebläse 41,42 erzeugen permanent einen Saugdruck. Sobald sich die Ventile 43,44 in den Vakuumleitungen 25 öffnen, baut sich über die Vakuumleitungen 25 Unterdruck in den Vakuumleisten 4,4 auf, so daß über deren Sauglöcher 22 die anliegenden Fotoresistbänder 45,46 angesaugt werden. Ein Träger bzw. eine Platte 26 wird in Laufrichtung A auf einer nicht dargestellten Transportrollenbahn in Richtung der Laminierwalzen 1,1 bewegt. Der optische Sensor 8 erfaßt die Vorderkante des Trägers 26. Der Impuls des optischen Sensors 8 löst den Impulsgeber 47 aus, der beispielsweise an der Welle des nicht gezeigten Hauptmotors angeordnet sein kann. Bei diesem Impulsgeber 47 handelt es sich um einen inkrementalen Impulsgeber, der nach dem Empfang des Auslöseimpulses von dem Sensor 8 digital vorwärts zählt, d. h., bis auf einen fest eingestellten Wert hochzählt. Wird dieser Zahlenwert erreicht, so gibt der Impulsgeber ein Signal ab, das die Hubzylinder 6,6 zum Anheben und Absenken der Vakuumleisten 4,4 senkrecht zur Laufrichtung A des Trägers 26 betätigt. Es werden also die Vakuumleisten 4,4 mit den angesaugten Fotoresistbänder 45,46 in Richtung auf den Träger 26 abgesenkt bzw. angehoben, gleichzeitig setzt sich der Vorschubschlitten 2 in Richtung der Laminierwalzen 1,1 in Bewegung, und die Transportrollen 10,10 sorgen für den weiteren Vorschub der Fotoresistbänder 45,46. Die Vakuumleisten 4,4 drücken die Fotoresistbänder 45,46 auf den Träger 26 auf, und es beginnt der Laminiervorgang. Der Unterdruck in den Vakuumleisten 4,4 wird aufgehoben, d. h., das Vakuum wird ausgeschaltet, und die Vakuumleisten 4,4 fahren auseinander in ihre Ausgangsstellungen. Gleichzeitig fährt der Vorschubschlitten 2 in seine Ausgangsstellung zurück, und der Träger 26 mit den auflaminierten Anfangsbandbereichen der Fotoresistbänder 45,46 wird durch die Laminierwalzen 1,1 hindurch transportiert. Diese Laminierwalzen sind beheizt, so daß durch die Hitze und den Anpreßdruck der Laminierwalzen die Fotoresistbänder auf den Träger 26 beidseitig auflaminiert werden.

Bei dem voranstehend beschriebenen Bewegungsablauf der Vakuumleisten 4,4 wird das Aufheben des Vakuums und das Auseinanderfahren der Vakuumleisten 4,4 durch die Näherungsschalter 28,31 und das Anhalten der Vakuumleisten durch die Näherungsschalter 27,32 gesteuert. Die Kolbenstangen 35,36 der Hubzylinder 6,6 passieren beim Ausfahren die Näherungsschalter 28,31 und lösen in diesen Signale aus, die beispielsweise den elektromagnetisch betätigten Ventilen 43,44 zugeführt werden und diese öffnen. Dadurch wird das Vakuum in den Vakuumleitungen 25 sowie in den Vakuumleisten 4,4 aufgehoben. Des weiteren kehren die Signale der beiden Näherungsschalter 28 und 31 die Bewegungen der Kolbenstangen 35,36 um, so daß die Vakuumleisten 4,4 auseinandergefahren werden. Sobald die Kolbenstangen 35,36 die beiden anderen Näherungsschalter 27,32 passieren, werden in diesen Schaltimpulse ausgelöst, die eine Kontrollfunktion besitzen und anzeigen, daß die Vakuumleisten 4,4 nunmehr wieder in ihrer Ausgangsstellung positioniert sind.

Der optische Sensor 8 erfaßt auch die Hinterkante des Trägers 26, der von den Laminierwalzen 1,1 weitertransportiert wird. Der inkrementale Impulsgeber 47 beginnt dann rückwärts zu zählen, d. h. vom fest eingestellten Wert wieder auf Null zurückzuzählen. Zusammenfassend bedeutet dies, daß nach dem Registrieren der Vorderkante des Trägers 26 der inkrementale Impulsgeber 47 von 0 bis 600 Impulsen hochzählt, wobei dieser Wert von 600 Impulsen durch einen ersten Sollwertgeber fest vorgegeben ist. Nach Erreichen der 600 Impulse werden die Vakuumleisten 4,4 angehoben bzw. abgesenkt, und das Auflaminieren der Fotoresistbänder 45,46 auf den Träger 26 beginnt, wobei im allgemeinen ein vorderer Überstand des Trägers 26 gegenüber den Fotoresistbändern 45,46 eingehalten wird, in der Form, daß beispielsweise der Abstand Vorderkante Träger zu Vorderkanten der Fotoresistbänder 5 bis 15 mm beträgt. Da der Sensor 8 in Laufrichtung A in einigem Abstand vor den Vakuumleisten 4,4 angeordnet ist, korrespondieren die 600 Impulse mit der Strecke, die der Träger 26 bzw. seine Vorderkante vom Sensor 8 bis zum Beginn des Auflaminierens der Fotoresistbänder zurückgelegt hat. Der fest eingestellte Wert von 600 Impulsen ist beispielsweise auch für einen zweiten Sollwertgeber die Ausgangsmarke. Sobald der Sensor 8 die Hinterkante des Trägers 26 erfaßt, beginnt der vom inkrementalen Impulsgeber 47 angesteuerte Zähler von dem Ausgangswert 600 bis auf Null zurückzuzählen. Erfolgt beispielsweise bei Erreichen des Wertes Null der Schnitt der Fotoresistbänder, so schließen die Hinterkanten der auflaminierten Fotoresistbögen mit der Hinterkante des Trägers 26 ab, d. h., der hintere Überstand des Trägers 26 ist gleich null. Wird andererseits der zweite Sollwertgeber auf 550 Impulse eingestellt und von diesem Wert auf Null zurückgezählt, so ergibt sich ein hinterer Überstand des Trägers 26 von einigen Millimetern. Es gilt allgemein, daß je höher der vorgegebene Sollwert für das Erfassen der Vorderkante des Trägers 26 ist, d. h. je mehr nach oben von dem Ausgangswert von z. B. 600 Impulsen abgewichen wird, desto größer der vordere Überstand des Trägers 26 gegenüber den Vorderkanten der Fotoresistbänder 45,46 ist. Umgekehrt gilt für den vorgegebenen Sollwert zum Erfassen der Hinterkante des Trägers 26, daß der hintere Überstand umso größer ist desto kleiner der Sollwert im Vergleich zu dem Ausgangswert von z. B. 600 Impulsen ist. Der Ausgangswert kann selbstverständlich auch niedriger oder höher als 600 Impulse sein. Durch die unterschiedlich einstellbaren Sollwerte für den Zähler, der die Zählimpulse des Impulsgebers 47 mit den vorgegebenen Sollwerten der Sollwertgeber vergleicht und bei Übereinstimmung Schaltsignale für die Vakuumleisten bzw. die Schneideinrichtungen auslöst, können verschieden lange vordere und hintere Überstände für jeden einzelnen Träger 26 bei Bedarf erzielt werden. Nach jedem Zählvorgang für den einzelnen Träger 26 wird der Zähler wieder auf Null gesetzt, so daß eventuelle Impulszählfehler, die sich für eine Anzahl von Trägern aufaddieren könnten, vermieden werden.

Sobald der Impulsgeber 47 beim Rückwärtszählen den Ausgangswert erreicht hat, werden die Vakuumleisten 4,4 wieder mit Vakuum beaufschlagt und der Vorschubschlitten 2 vorwärts bewegt. Die Transportrollen 10,10 für den Vorschub der Fotoresistbänder 45,46 werden sodann angehalten.

In der zuletzt erreichten Stellung ist der Vorschubschlitten 2 in seiner vorderen Position und die auseinandergefahrenen Vakuumleisten 4,4 sind mit Unterdruck beaufschlagt, so daß sie die Fotoresistbänder 45,46 festhalten, während die beiden Paare von Transportrollen 10,10 den Vorschub der Fotoresistbänder anhalten. Die Kolbenstangen der Hubzylinder 7,7 an denen die Haltebalken 14,14 mit den Schneidbänder 5,5 befestigt sind, fahren aus, so daß die beiden Schneidbänder die festgehaltenen Fotoresistbänder durchtrennen. Wenn die Kolbenstangen die Näherungsschalter 29,34 passieren, so werden in diesen Näherungsschaltern Impulse ausgelöst, die das Anheben bzw. Absenken der Schneidbänder anhalten und eine Bewegungsumkehr der Kolbenstangen einleiten. Zugleich wird der Vorschubschlitten 2 in seine Ausgangs- bzw. Wartestellung zurückgeschoben. Sobald die Kolbenstangen beim Einfahren in die Hubzylinder 7,7 die weiteren Näherungsschalter 30,34 passieren, stoppen die Impulse dieser Näherungsschalter die weitere Bewegung der Schneidbänder, die sich dann wieder in ihrer Wartestellung befinden.

Durch die doppelte Ausführung der Näherungsschalter oberhalb und unterhalb der Bahn des Trägers 26 ist wahlweise ein einseitiges oder doppelseitiges Auflaminieren eines Fotoresistbandes bzw. von zwei Fotoresistbändern möglich.

## Patentansprüche

1. Vorrichtung zum Laminieren und Schneiden von Fotoresistbahnen, die Transportrollen den beiden Seiten eines Trägers zuführen, der durch den Spalt zweier Laminierwalzen hindurchläuft, mit beweglichen Vakuumleisten zum Ansaugen und Festhalten der Fotoresistbahnen und mit Schneideinrichtungen für einen Parallelschnitt der Fotoresistbahnen während des Laminiervorgangs, dadurch gekennzeichnet, daß auf einem Vorschubschlitten (2), der in Laufrichtung (A) des Trägers (26) hin- und herverfahrbar ist, zwei Schneideinheiten (3,3), ausgerüstet mit Vakuumleisten (4,4) und Schneidbändern (5,5), angeordnet sind, und daß ein Sensor (8) die Vorder- und Hinterkante des Trägers (26) erfaßt, mit einem Impulsgeber (47) verbunden ist und über diesen die Hubzylinder (6,6) zum Auseinander- und Zusammenfahren der Schneideinheiten (3,3) senkrecht zur Laufrichtung (A) des Trägers (26) steuert.

2. Vorrichtung nach Anspruch 1, dadurch gekennzeichnet, daß die Vakuumleisten (4,4) an Kolbenstangen (35,36) der Hubzylinder (6,6) befestigt sind, daß Näherungsschalter (27,28 bzw. 31,32), die in geringem Abstand parallel zu den Kolbenstangen (35 bzw. 36) angeordnet sind, durch die Bewegungen der Kolbenstangen (35,36) geschaltet werden und daß die Schaltimpulse der Näherungsschalter (28,31 bzw. 27,32) an den Umkehr- und/oder Haltepunkten des Zusammen- bzw. Auseinanderfahrens der Vakuumleisten (4,4) den Unterdruck in den Vakuumleisten beenden und auf das Auseinanderfahren der Vakuumleisten umschalten bzw. die Auseinanderbewegung der Vakuumleisten anhalten.

3. Vorrichtung nach Anspruch 1, dadurch gekennzeichnet, daß das obere und das untere Schneidband (5) jeweils an einem Haltebalken (14) befestigt ist, daß die Haltebalken (14,14) mit Kolbenstangen (48,49) von Hubzylindern (7,7) verbunden sind, daß die Schneidbänder (5,5) auf der Höhe der auseinandergefahrenen oberen und unteren Vakuumleiste (4) ihre Ausgangsposition quer zur Laufrichtung (A) des Trägers (26) einnehmen und daß die Schneidbewegung der Schneidbänder (5,5) senkrecht zur Laufrichtung (A) des Trägers (26) bis zu 10 mm beträgt und kürzer als der Abstand von der Ausgangsposition zu der Bahn des Trägers (26) ist.

4. Vorrichtung nach Anspruch 3, dadurch gekennzeichnet, daß Näherungsschalter (29,30 bzw. 33,34) parallel zu den Kolbenstangen (48,49) der Hubzylinder (7,7) angeordnet sind und durch die Bewegungen der Kolbenstangen geschaltet werden, und daß die Schaltimpulse der Näherungsschalter das Anheben der Schneidbänder (5,5) nach vollbrachtem Parallelschnitt der Fotoresistbänder (45,46) und das Anhalten der Schneidbänder (5,5) in ihren Ausgangspositionen steuern.

5. Vorrichtung nach Anspruch 2, dadurch gekennzeichnet, daß parallel zu beiden Seiten der Kolbenstangen (35,36) der Hubzylinder (6,6) je eine Linearführung (39) für die Vakuumleisten (4,4) angeordnet ist.

6. Vorrichtung nach Anspruch 3, dadurch gekennzeichnet, daß parallel zu beiden Seiten der Kolbenstangen (48,49) der Hubzylinder (7,7) Linearführungen (40) für die Schneidbänder (5,5) angeordnet sind.

7. Vorrichtung nach Anspruch 1, dadurch gekennzeichnet, daß die Vakuumleisten (4,4) über Vakuumleitungen (25) und Vakuumventilen (43,44) mit Vakuumgebläsen (41,42) verbunden sind und daß die Vakuumgebläse (41,42) während des Betriebs der Vorrichtung ständig laufen.

8. Vorrichtung nach Anspruch 7, dadurch gekennzeichnet, daß durch Schließen der Vakuumventile (43,44) der Unterdruck in den Vakuumleisten (4,4) aufgebaut wird.

9. Vorrichtung nach Anspruch 3, dadurch gekennzeichnet, daß jedes der beiden Schneidbänder (5,5) über Isolatoren (12,12) mit dem zugehörigen Haltebalken (14) in Verbindung steht, daß einer der Isolatoren über eine Schneidband-Spanneinheit (11) mit dem Haltebalken (14) verbunden ist und daß der andere Isolator (12) direkt an dem Haltebalken befestigt ist.

10. Vorrichtung nach Anspruch 9, dadurch gekennzeichnet, daß die Schneidband-Spanneinheit (11) aus einem Spannklotz (18) und einer Welle (19), auf der eine Druckfeder (20) aufgeschoben ist, besteht und daß der eine Isolator (12) an dem Spannklotz (18) befestigt ist.

11. Vorrichtung nach Anspruch 9, dadurch gekennzeichnet, daß der Haltebalken (14) an einem Stirnende einen Ausschnitt mit einem Steg (50) aufweist, in dem eine Halterung (21) eingepaßt ist, die mit dem Steg (50) durch Halteschrauben (17,17) verbunden ist.

12. Vorrichtung nach den Ansprüchen 10 und 11, dadurch gekennzeichnet, daß in der Halterung (21) in Längsrichtung des Haltebalkens (14) eine Linearkugelführung (16) angeordnet ist, in die die Welle (19) teilweise eingeschoben ist und daß die Druckfeder (20) mit einem Ende gegen die Stirnfläche der Linearkugelführung (16) und mit dem anderen Ende gegen den Spannklotz (18) anliegt.

## Claims

1. An apparatus for the laminating and cutting of photoresist webs, which transport rollers feed to the two sides of a support running through the nip of two laminating rolls, with movable vacuum bars for sucking to them and firmly holding the photoresist webs and with cutting devices for a parallel cut of the photoresist webs during the laminating operation, wherein two cutting units (3, 3), equipped with vacuum bars (4, 4) and cutting bands (5, 5), are arranged on a feed carriage (2), which can traverse back and forth in running direction (A) of the support (26) and wherein a sensor (8) which detects the front and rear edges of the base (26), is connected to a pulse transmitter (47) and, via the latter, controls the lifting cylinders (6, 6) for the moving apart and together of the cutting units (3, 3) perpendicularly to the running direction (A) of the support (26).

2. The apparatus as claimed in claim 1, wherein the vacuum bars (4, 4) are fixed to piston rods (35, 36) of the lifting cylinders (6, 6), wherein proximity switches (27, 28 and 31, 32), which are arranged at a small distance parallel to the piston rods (35 and 36) are actuated by the movements of the piston rods (35, 36) and wherein the switching pulses of the proximity switches (28, 31 and 27, 32) end the negative pressure in the vacuum bars at the reversing and/or holding points of the moving together and apart, respectively, of the vacuum bars (4, 4) and switch over to the moving apart of the vacuum bars or stop the moving apart of the vacuum bars.

3. The apparatus as claimed in claim 1, wherein the upper and the lower cutting band (5) is in each case fixed to a holding beam (14), wherein the holding beams (14, 14) are connected to piston rods (48, 49) of lifting cylinders (7, 7), wherein the cutting bands (5, 5) assume their initial position transverse to the running direction (A) of the support (26) on the level of the moved-apart upper and lower vacuum bars (4) and wherein the cutting movement of the cutting bands (5, 5) perpendicular to the running direction (A) of the support (26) is up to 10 mm and is shorter than the distance from the initial position to the path of the support (26).

4. The apparatus as claimed in claim 3, wherein proximity switches (29, 30 and 33, 34) are arranged parallel to the piston rods (48, 49) of the lifting cylinders (7, 7) and are actuated by the movements of the piston rods, and wherein the switching pulses of the proximity switches control the raising of the cutting bands (5, 5) after completed parallel cut of the photoresist webs (45, 46) and the stopping of the cutting bands (5, 5) in their initial positions.

5. The apparatus as claimed in claim 2, wherein a linear guide (39) for the vacuum bars (4, 4) is arranged in each case parallel to both sides of the piston rods (35, 36) of the lifting cylinders (6, 6).

6. The apparatus as claimed in claim 3, wherein linear guides (40) for the cutting bands (5, 5) are arranged parallel to both sides of the piston rods (48, 49) of the lifting cylinders (7, 7).

7. The apparatus as claimed in claim 1, wherein the vacuum bars (4, 4) are connected via vacuum lines (25) and vacuum valves (43, 44) to vacuum blowers (41, 42) and wherein the vacuum blowers (41, 42) run constantly during the operation of the apparatus.

8. The apparatus as claimed in claim 7, wherein the negative pressure in the vacuum bars (4, 4) is built up by closing the vacuum valves (43, 44).

9. The apparatus as claimed in claim 3, wherein each of the two cutting bands (5, 5) is in connection via insulators (12, 12) with the associated holding beam (14), wherein one of the insutators is connected via a cutting band tightening unit (11) to the holding beam (14) and wherein the other insulator (12) is fixed directly to the holding beam.

10. The apparatus as claimed in claim 9, wherein the cutting band clamping unit (11) consists of a clamping block (18) and a shaft (19), on which a compression spring (20) is pushed, and wherein one insulator (12) is fixed to the clamping block (18).

11. The apparatus as claimed in claim 9, wherein the holding beam (14) has at one end face a cut-out with a web (50), in which a holding device (21) is fitted, which is connected to the web (50) by holding screws (17, 17).

12. The apparatus as claimed in claims 10 and 11, wherein a linear ball bearing (16), into which the shaft (19) is partially pushed, is arranged in the holding device (21) in longitudinal direction of the holding beam (14) and wherein the compression spring (20) bears with one end against the end face of the linear ball bearing (16) and with the other end against the clamping block (18).

## Revendications

1. Dispositif pour la stratification et le découpage de bandes de photorésist, que des rouleaux de transport acheminent sur les deux faces d'un support passant dans la fente de deux cylindres de stratification, avec une installation mobile pour établir le vide, afin d'aspirer et de maintenir les bandes de photorésist, et des dispositifs de découpage parallèle des bandes de photorésists pendant la stratification, caractérisé en ce que deux unités de coupe (3,3) pourvues d'une installation pour établir le vide (4,4) et de bandes coupantes (5,5) sont disposées sur un chariot d'acheminement (2), déplaçable en va-et-vient dans la direction (A) du mouvement du support (26), et en ce qu'un capteur (8), relié à un générateur d'impulsions (47), détecte les bords antérieur et postérieur du support (26) et commande ainsi les cylindres de levage (6,6) pour l'écartement et le rapprochement des unités de découpe (3,3), perpendiculairement à la direction (A) du mouvement du support (26).

2. Dispositif selon la revendication 1, caractérisé en ce que l'installation pour établir le vide (4,4) est fixée aux tiges des pistons (35,36) des cylindres de levage (6,6), en ce que des détecteurs de proximité (27,28 ou 31,32), qui sont disposés parallèlement aux tiges des pistons (35 ou 36) et à une faible distance d'elles, sont actionnés par les mouvements des tiges de piston (35,36), et en ce que les impulsions de commutation des détecteurs de proximité (28,31 ou 27,32), aux points de renversement ou d'arrêt de l'écartement ou du rapprochement des installations pour établir le vide (4,4), font cesser le vide dans les installations et inversent ou font cesser le mouvement d'écartement des installations.

3. Dispositif selon la revendication 1, caractérisé en ce que les bandes coupantes supérieure et inférieure (5) sont chacune fixées à une barre de maintien (14), en ce que les barres de maintien (14,14) sont reliées aux tiges des pistons (48,49) des cylindres de levage (7,7), en ce que les bandes coupantes (5,5) prennent leur position de départ au sommet des installations supérieure et inférieure (4), écartées l'une de l'autre, transversalement à la direction (A) du mouvement du support (26), et en ce que la course de découpe des bandes coupantes (5,5), perpendiculaire à la direction (A) du mouvement du support (26), peut atteindre 10 mm et est plus courte que la distance de la position de départ au plan de mouvement du support (26).

4. Dispositif selon la revendication 3, caractérisé en ce que des détecteurs de proximité (29,30 ou 33,34) sont disposés parallèlement aux tiges des pistons (48,49) des cylindres de levage (7,7) et sont actionnés par les mouvements des tiges des pistons, et en ce que les impulsions de commutation des détecteurs de proximité commandent le soulèvement des bandes coupantes (5,5) après achèvement de la découpe parallèle des bandes de photorésist (45,46) et l'arrêt des bandes coupantes (5,5) à leurs positions de départ.

5. Dispositif selon la revendication 2, caractérisé en ce que, parallèlement aux deux côtés des tiges des pistons (35,36) des cylindres de levage (6,6), un guidage linéaire (39) est chaque fois prévu pour les installations pour établir le vide (4,4).

6. Dispositif selon la revendication 3, caractérisé en ce que, parallèlement aux deux côtés des tiges des pistons (49,49) des cylindres de levage (7,7), sont disposés des guidages linéaires (40) pour les bandes coupantes (5,5).

7. Dispositif selon la revendication 1, caractérisé en ce que les installations pour établir le vide (4,4) sont reliées, par des conduites de vide (25) et des vannes à vide (43,44), à des chambres à vide (41,42), et en ce que les chambres à vide (41,42) fonctionnent en permanence lors de la marche de l'installation.

8. Dispositif selon la revendication 7, caractérisé en ce que le vide est créé dans les installations (4,4) par fermeture des vannes à vide (43,44).

9. Dispositif selon la revendication 3, caractérisé en ce que chacune des deux bandes coupantes (5,5) est reliée par des isolateurs (12,12) à la barre de maintien (14) correspondante, en ce que l'un des isolateurs est relié par un tendeur de bande coupante (11) à la barre de maintien (14) et que l'autre isolateur (12) est fixé directement à la barre de maintien.

10. Dispositif selon la revendication 9, caractérisé en ce que le tendeur de bande coupante (11) se compose d'un bloc d'étirage (18) et d'un arbre (19), sur lequel coulisse un ressort de compression (20), et en ce qu'un isolateur (12) est fixé au bloc d'étirage (18).

11. Dispositif selon la revendication 9, caractérisé en ce que la barre de maintien (14) présente, à une extrémité frontale, une section pourvue d'un noyau (50), dans lequel est adapté un support (21) qui est relié au noyau (50) par des vis de fixation (17,17).

12. Dispositif selon les revendications 10 et 11, caractérisé en ce que, dans le support (21), un guidage linéaire à billes (16) est disposé longitudinalement par rapport à la barre de maintien (14), dans lequel l'arbre (19) est partiellement introduit, et en ce que le ressort de compression (20) se présente avec une extrémité dirigée vers la face frontale du guidage linéaire à billes (16) et avec l'autre extrémité dirigée vers le bloc d'étirage (18).
